# EUROPEAN PATENT APPLICATION

(11) **EP 3 255 248 A1**
(43) Date of publication of application: **13.12.2017**
(21) Application number: 17166346.1
(22) Date of filing: 12.04.2017
(51) Int. Cl.: F01D 5/18, F01D 9/02, F01D 9/06, F02K 1/82, F23R 3/00, F01D 9/04, F01D 25/08, F23R 3/04

(54) **ENGINE COMPONENT FOR A TURBINE ENGINE**

(30) Priority: 14.04.2016 US 201615098733
(71) Applicant: General Electric Company, Schenectady, NY 12345 (US)
(72) Inventor: WEBSTER, Zachary Daniel, Cincinnati, OH Ohio 45215 (US); FELDMANN, Kevin Robert, Cincinnati, OH Ohio 45215 (US)
(74) Representative: Williams, Andrew Richard

(57) **Abstract**

A component (90) for a turbine engine comprises a wall (92) separating a hot combustion gas flow (H) from a cooling fluid flow (C) and having a hot surface (94) along which the hot combustion gas flows and a cooled surface (96) facing the cooling fluid flow and at least one film-hole (88) having a metering section (106) with an inlet (100) on the cooled surface, a conical section (109) coupled to the metering section and having and outlet on the hot surface, the outlet having a different cross-sectional shape (112) and area (114) than the inlet, wherein the metering section is oriented relative to the conical section such that a surface line (111), located on an outer surface (116) of the metering section, is parallel to a centerline (110) of the metering section and tangentially intersects (113) and lies on an outer surface of the conical section.

## Description

### BACKGROUND

Turbine engines, and particularly gas or combustion turbine engines, are rotary engines that extract energy from a flow of combusted gases passing through the engine onto a multitude of rotating turbine blades.

Engine efficiency increases with temperature of combustion gases. However, the combustion gases heat the various components along their flow path, which in turn requires cooling thereof to achieve a long engine lifetime. Typically, the hot gas path components are cooled by bleeding air from the compressor. This cooling process reduces engine efficiency, as the bled air is not used in the combustion process.

Turbine engine cooling art is mature and includes numerous patents for various aspects of cooling circuits and features in the various hot gas path components. For example, the combustor includes radially outer and inner liners, which require cooling during operation. Turbine nozzles include hollow vanes supported between outer and inner bands, which also require cooling. Turbine rotor blades are hollow and typically include cooling circuits therein, with the blades being surrounded by turbine shrouds, which also require cooling. The hot combustion gases are discharged through an exhaust which may also be lined, and suitably cooled.

In all of these exemplary turbine engine components, thin metal walls of high strength superalloy metals are typically used for enhanced durability while minimizing the need for cooling thereof. Various cooling circuits and features are tailored for these individual components in their corresponding environments in the engine. In addition, all of these components typically include common rows of film cooling holes.

A typical film cooling hole is a cylindrical bore inclined at a shallow angle through the heated wall for discharging a film of cooling air along the external surface of the wall to provide thermal insulation against the flow from hot combustion gases during operation. The film is discharged at a shallow angle over the wall outer surface to minimize the likelihood of undesirable blow-off, which would lead to flow separation and a loss of the film cooling effectiveness.

The geometrical relationship between the inlet and the outlet of the film hole can affect engine efficiency and airfoil cooling.

### BRIEF DESCRIPTION

In one aspect, there is provided an engine component for a turbine engine, which generates a hot combustion gas flow, and provides a cooling fluid flow, comprising: a wall separating the hot combustion gas flow from the cooling fluid flow and having a hot surface along with the hot combustion gas flows in a hot flow path and a cooled surface facing the cooling fluid flow, and at least one film-hole having a metering section with an inlet provided on the cooled surface, a conical section fluidly coupled to the metering section and having and outlet provided on the hot surface, the outlet having a different cross-sectional shape and cross-sectional area than the inlet, wherein the metering section is oriented relative to the conical section such that a surface line, located on an outer surface of the metering section, is parallel to a centerline of the metering section and tangentially intersects and lies an outer surface of the conical section.

In another aspect, there is provided an engine component for a turbine engine, which generates a hot combustion gas flow, and provides a cooling fluid flow, comprising: a wall separating the hot combustion gas flow from the cooling fluid flow and having a hot surface along with the hot combustion gas flows in a hot flow path and a cooled surface facing the cooling fluid flow, and at least one film-hole having a metering section with an inlet provided on the cooled surface, a conical section fluidly coupled to the metering section and having an outlet provided on the hot surface, the outlet having a greater cross-sectional area than the inlet, wherein the inlet cross-sectional area projected along its centerline lies entirely within the outlet cross-sectional area projected along the same centerline.

### BRIEF DESCRIPTION OF THE DRAWINGS

In the drawings:
Figure 1 is a schematic cross-sectional diagram of a turbine engine for an aircraft.
Figure 2 is a side section view of a combustor and a high pressure turbine of the engine from Figure 1.
Figure 3 is a sectional view through a film hole of an engine component of the engine from Figure 1.
Figure 4 is sectional view through second embodiment of a film hole of an engine component of the engine from Figure 1.
Figure 5A - E are embodiments of different outlet shapes as viewed along a centerline for an inlet of the film hole.
Figure 6A and 6B are additional embodiments of different outlet shapes as viewed along a centerline for an inlet of the film hole.

### DETAILED DESCRIPTION

The described embodiments of the present invention are directed to the formation of a hole such as a film-hole in an engine component such as an airfoil. For purposes of illustration, the present invention will be described with respect to the turbine for an aircraft turbine engine. It will be understood, however, that the invention is not so limited and may have general applicability within an engine, including compressors, as well as in non-aircraft applications, such as other mobile applications and non-mobile industrial, commercial, and residential applications.

As used herein, the term "forward" or "upstream" refers to moving in a direction toward the engine inlet, or a component being relatively closer to the engine inlet as compared to another component. The term "aft" or "downstream" used in conjunction with "forward" or "upstream" refers to a direction toward the rear or outlet of the engine relative to the engine centerline.

Additionally, as used herein, the terms "radial" or "radially" refer to a dimension extending between a center longitudinal axis of the engine and an outer engine circumference.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present invention, and do not create limitations, particularly as to the position, orientation, or use of the invention. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. Furthermore it should be understood that the term cross section or cross-sectional as used herein is referring to a section taken orthogonal to the centerline and to the general coolant flow direction in the hole. The exemplary drawings are for purposes of illustration only and the dimensions, positions, order and relative sizes reflected in the drawings attached hereto can vary.

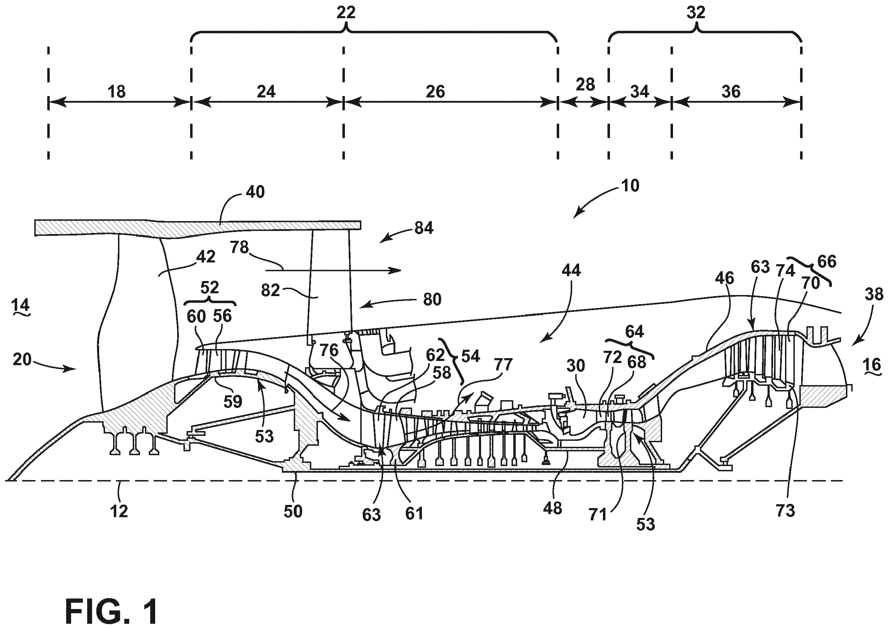

Figure 1 is a schematic cross-sectional diagram of a turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the centerline 12, from a blade platform to a blade tip, while the corresponding static compressor vanes 60, 62 are positioned upstream of and adjacent to the rotating blades 56, 58. It is noted that the number of blades, vanes, and compressor stages shown in Figure 1 were selected for illustrative purposes only, and that other numbers are possible.

The blades 56, 58 for a stage of the compressor can be mounted to a disk 59, which is mounted to the corresponding one of the HP and LP spools 48, 50, with each stage having its own disk 59, 61. The vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine vanes 72, 74 can be provided in a ring and can extend radially outwardly relative to the centerline 12, while the corresponding rotating blades 68, 70 are positioned downstream of and adjacent to the static turbine vanes 72, 74 and can also extend radially outwardly relative to the centerline 12, from a blade platform to a blade tip. It is noted that the number of blades, vanes, and turbine stages shown in Figure 1 were selected for illustrative purposes only, and that other numbers are possible.

The blades 68, 70 for a stage of the turbine can be mounted to a disk 71, which is mounted to the corresponding one of the HP and LP spools 48, 50, with each stage having its own disk 71, 73. The vanes 72, 74 for a stage of the compressor can be mounted to the core casing 46 in a circumferential arrangement.

The portions of the engine 10 mounted to and rotating with either or both of the spools 48, 50 are also referred to individually or collectively as a rotor 53. The stationary portions of the engine 10 including portions mounted to the core casing 46 are also referred to individually or collectively as a stator 63.

In operation, the airflow exiting the fan section 18 is split such that a portion of the airflow is channeled into the LP compressor 24, which then supplies pressurized ambient air 76 to the HP compressor 26, which further pressurizes the ambient air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the engine 10 via the exhaust section 38. The driving of the LP turbine 36 drives the LP spool 50 to rotate the fan 20 and the LP compressor 24.

A remaining portion of the airflow 78 bypasses the LP compressor 24 and engine core 44 and exits the engine assembly 10 through a stationary vane row, and more particularly an outlet guide vane assembly 80, comprising a plurality of airfoil guide vanes 82, at the fan exhaust side 84. More specifically, a circumferential row of radially extending airfoil guide vanes 82 are utilized adjacent the fan section 18 to exert some directional control of the airflow 78.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally the combustor 30 and components downstream of the combustor 30, especially the turbine section 32, with the HP turbine 34 being the hottest portion as it is directly downstream of the combustion section 28. Other sources of cooling fluid can be, but is not limited to, fluid discharged from the LP compressor 24 or the HP compressor 26. This fluid can be bleed air 77 which can include air drawn from the LP or HP compressors 24, 26 that bypasses the combustor 30 as cooling sources for the turbine section 32. This is a common engine configuration, not meant to be limiting.

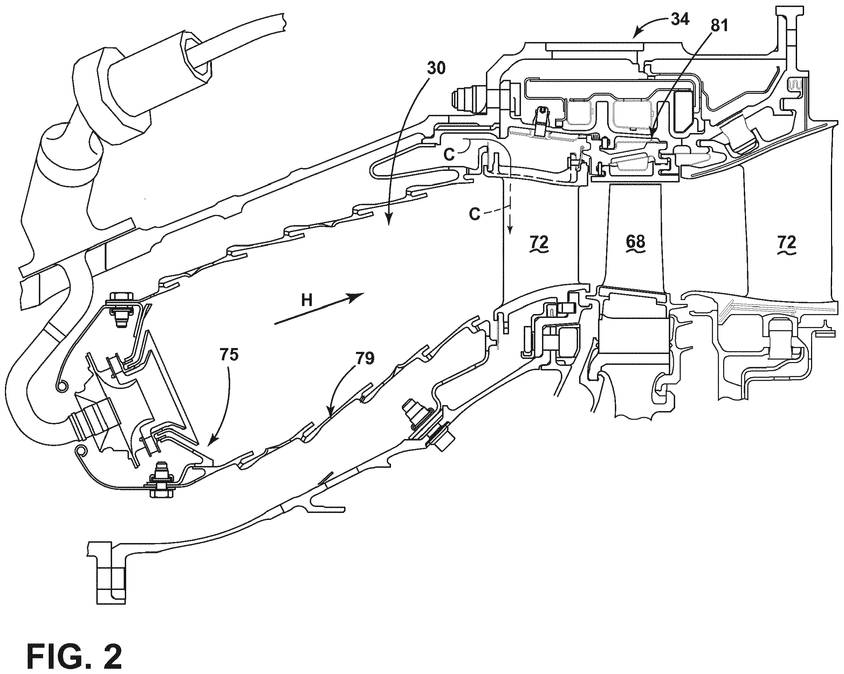

Figure 2 is a side section view of the combustor 30 and HP turbine 34 of the engine 10 from Figure 1. The combustor 30 includes a deflector 75 and a combustor liner 79. Adjacent to the turbine blade 68 of the turbine 34 in the axial direction are sets of radially-spaced, static turbine vanes 72, with adjacent vanes 72 forming nozzles therebetween. The nozzles turn combustion gas to better flow into the rotating blades so that the maximum energy may be extracted by the turbine 34. A cooling fluid flow C passes through the vanes 72 to cool the vanes 72 as a hot combustion gas flow H passes along the exterior of the vanes 72. A shroud assembly 81 is adjacent to the rotating blade 68 to minimize flow loss in the turbine 34. Similar shroud assemblies can also be associated with the LP turbine 36, the LP compressor 24, or the HP compressor 26. It should be understood that the cooling flow C as depicted is by way of example only. Other examples include but are not limited to vanes, blades, shrouds, combustion liners, or any other component that requires cooling.

One or more of the engine components of the engine 10 includes a film-cooled substrate in which a film cooling hole, or film-hole, of an embodiment disclosed further herein may be provided. Some non-limiting examples of the engine component having a film-cooled substrate can include the blades 68, 70, vanes or nozzles 72, 74, combustor deflector 75, combustor liner 79, or shroud assembly 81, described in Figures 1-2. Other non-limiting examples where film cooling is used include turbine transition ducts and exhaust nozzles.

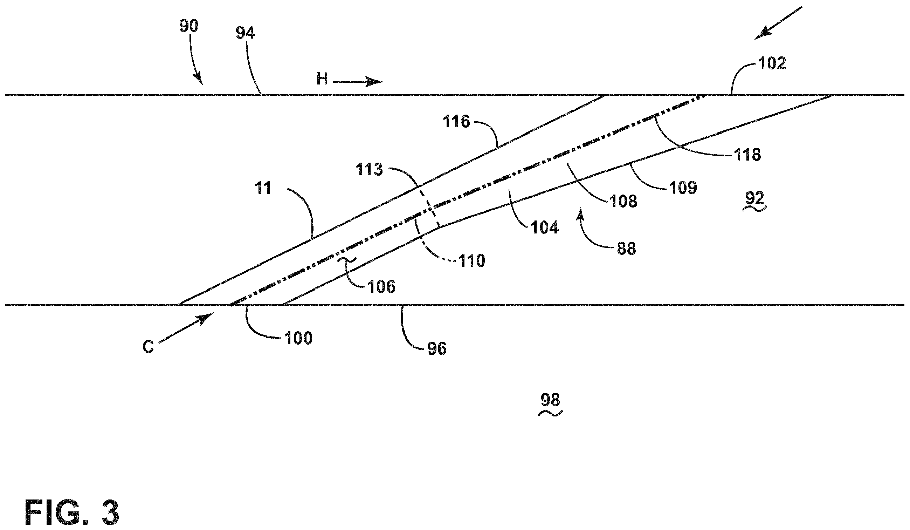

Figure 3 is a schematic, sectional view of a hole 88, illustrated as a film-hole, located in the turbine engine 10. In an exemplary embodiment the hole 88 is located in an engine component 90, such as a leading edge for an airfoil, comprising a substrate 92 separating a hot combustion gas flow H from a cooling fluid flow C. As discussed above with respect to Figures 1 and 2, in the context of a turbine engine, the cooling air can be ambient air supplied by the fan 20 which bypasses the engine core 44, air from the LP compressor 24, or air from the HP compressor 26.

The engine component 90 includes a substrate 92 having a hot surface 94 facing the hot combustion gas flow H and a cool surface 96 facing the cooling fluid C. The substrate 92 may form a wall of the engine component 90 that can be an exterior or interior wall of the engine component 90. The first engine component 90 can define at least one interior cavity 98 comprising the cool surface 96. The hot surface 94 may be an exterior surface of the engine component 90. In the case of a turbine engine, the hot surface 94 may be exposed to gases having temperatures in the range of 1000 °C to 2000 °C. Suitable materials for the substrate 92 include, but are not limited to, steel, refractory metals such as titanium, or superalloys based on nickel, cobalt, or iron, and ceramic matrix composites. The superalloys can include those in equi-axed, directionally solidified, and single crystal structures.

The engine component 90 further includes one or more film-hole(s) 88 extending through the substrate 92 that provide fluid communication between the interior cavity 98 and the hot surface 94 of the engine component 90. During operation, the cooling fluid flow C is supplied to the interior cavity 98 and out of the hole 88 to create a thin layer or film of cool air on the hot surface 94, protecting it from the hot combustion gas flow H. While only one hole 88 is shown in Figure 3, it is understood that the engine component 90 may be provided with multiple film-holes 88, which be arranged in any desired configuration on the engine component 90.

It is noted that, in any of the embodiments discussed herein, although the substrate 92 is shown as being generally planar, it is understood that that the substrate 92 may be curved for many engine components. However, the curvature of the substrate 92 may be slight in comparison to the size of the hole 88, and so for the purposes of discussion and illustration, the substrate 92 is shown as planar. Whether the substrate 92 is planar or curved local to the hole 88, the hot and cool surfaces 94, 96 may be parallel to each other as shown herein, or may lie in non-parallel planes.

The hole 88 can have an inlet 100 provided on the cool surface 96 of the substrate 92, an outlet region comprising an outlet 102 provided on the hot surface 94, and a film-hole passage 104 connecting the inlet 100 and the outlet 102. The film-hole passage 104 can include a metering section 106 having a circular cross section, though it could have any cross-sectional shape, for metering of the mass flow rate of the cooling fluid flow C, and a diffusing section 108 in which the cooling fluid C is expanded to form a wider and slower cooling film on the hot surface 94.

The diffusing section 108 is downstream of the metering section 106 with respect to the direction of cooling fluid flow C through the film-hole passage 104. The diffusing section 108 may be in serial flow communication with the metering section 106. The metering section 106 can be provided at or near the inlet 100, while the diffusing section 108 can be defined at or near the outlet 102. In most implementations, the diffusing section 108 defines the outlet 102.

The cooling fluid flow C through the film-hole passage 104 is along the longitudinal axis of the film-hole passage 104, also referred to herein as the centerline 110, which passes through the geometric center of the cross-sectional area of the metering section 106. The hole 88 can be inclined in a downstream direction of cooling fluid flow C through the film-hole passage 104 such that the centerline 110 is non-orthogonal to the hot and cool surfaces 94, 96.

Alternatively, the hole 88 may have a centerline 110 that is orthogonal to one or both of the hot and cool surfaces 94, 96 in the localized area of the substrate 92 through which the centerline 110 passes. In other embodiments, the centerline 110 of the hole 88 may not be oriented in the direction of the hot combustion gas flow H, such that the vector of the cooling fluid flow C differs from that of the hot combustion gas flow H. For example, a film-hole that has a compound angle defines a cooling flow vector that differs from the hot combustion gas flow vector not only in cross section, but also in the top-down view looking at the hot surface 94.

The diffusing section 108 can comprise a conical section 109, or any other suitable geometry for the section, fluidly coupled to the metering section 106 and terminating in the outlet 102 on the hot surface 94. A surface line 111 is located on an outer surface of the metering section 106 and is parallel to the centerline 110 of the metering section 106. The centerline 110 of the metering section 106 and a centerline 118 of the conical section 109 intersect and are non-coaxial with respect to each other.

The metering section 106 is oriented relative to the conical section 109 such that the surface line 111 tangentially intersects 113 and lies on an outer surface 116 of the conical section 109. In this way, the surface line 111 and the outer surface 116 of the conical section 109 form a continuous line and are collinear for the full extent of the film-hole passage 104. While illustrated as the full extent of the film-hole passage 104, the outer surfaces of the metering section 106 and the conical section 109 can be coplanar for only a portion of their full extent. Line 111 and surface 116 can be at any lines at other locations around the periphery and are not limited to the outer surface.

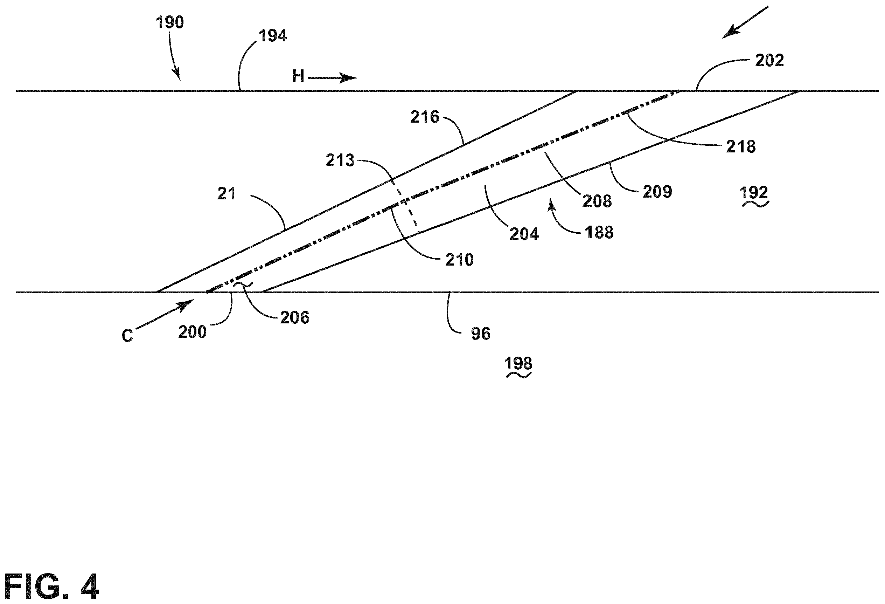

Another embodiment of the film-hole is contemplated in Figure 4. In this embodiment a conical section 209 can extend immediately from a metering section 206 so the full length of a film-hole passage 204 comprises the conical section 209. The metering function is narrowed to just the inlet 200 in that the inlet 200 fully defines the metering section 206. This embodiment is similar to the first embodiment, therefore, like parts are identified with like numerals increasing by 100, with it being understood that the description of the like parts of the first embodiment applies to the additional embodiment, unless otherwise noted.

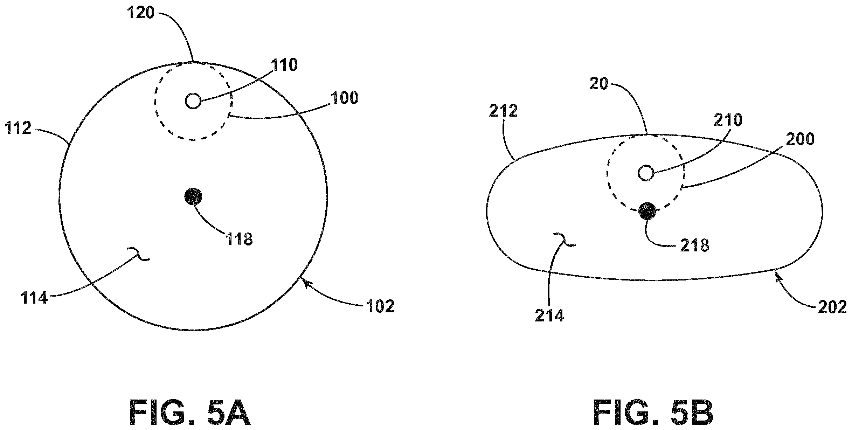

Turning to Figures 5A-E a collection of embodiments of a cross-sectional shape 112 and area 114 of the outlet 102 as seen when looking through the outlet 102 along the centerline of the inlet 100 are illustrated. The outlet 102 can be formed to have a different cross-sectional shape 112 and cross-sectional area 114 than the inlet 100 which lies entirely within the outlet 102 when looking through the outlet along the centerline of the inlet 100. Each embodiment is similar to the first embodiment, therefore, like parts are identified with like numerals increasing by 100, with it being understood that the description of the like parts of the first embodiment applies to the additional embodiment, unless otherwise noted.

Figures 5A and 5B illustrate a first and second embodiment of an outlet 102, 202 in the shape of a circle 112 or ellipse 212 where the inlet 100, 200 comprises a circle with a smaller cross-sectional area than the outlet 102, 202 and the inlet 100, 200 is tangential at one point 120 to the outlet when viewed from this orientation. This point 120 can be anywhere along the edge of the shape 112, 212.

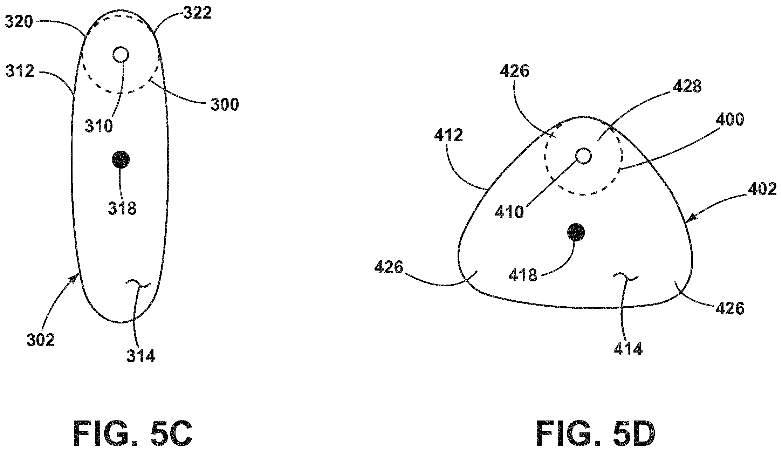

In Figure 5C a third embodiment of an outlet 302 forms an elliptical shape 312 oriented at 90° from the orientation of Figure 5B and includes a circular inlet 300 wherein only two portions 320, 322 of the inlet 300 are tangential to the outlet 302. While illustrated as an elliptical shape, the shape can be any shape in which an apex is formed wherein only two portions of the inlet are tangential to the outlet.

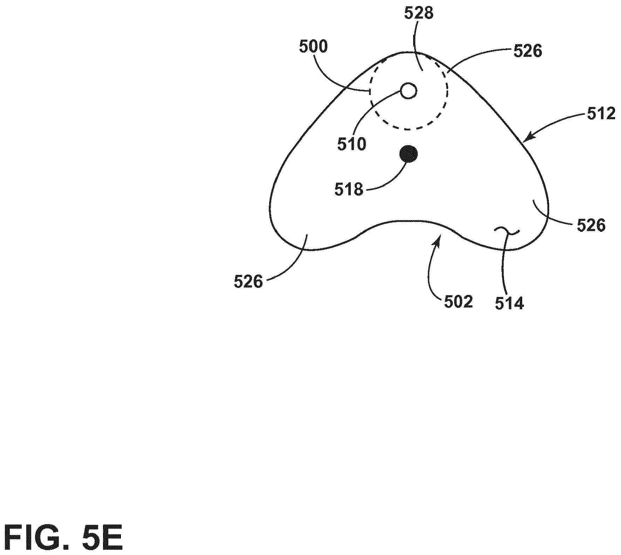

In fourth and fifth embodiments illustrated in Figures 5D and 5E the outlet 402, 502 comprises a reuleaux triangular shape 412 or another triangular shape 512 with an inwardly curving base 524 and includes at least one eccentricity 426, 526 in which at least a portion 428, 528 of the inlet 400, 500 is located when looking along the centerline 410, 510 of the inlet 400, 500. Any portion of the perimeter of the inlet 400, 500 can be coplanar or tangential to the outlet 402. The inlet and outlet can remain tangent to each other without the inlet being within an eccentricity as well.

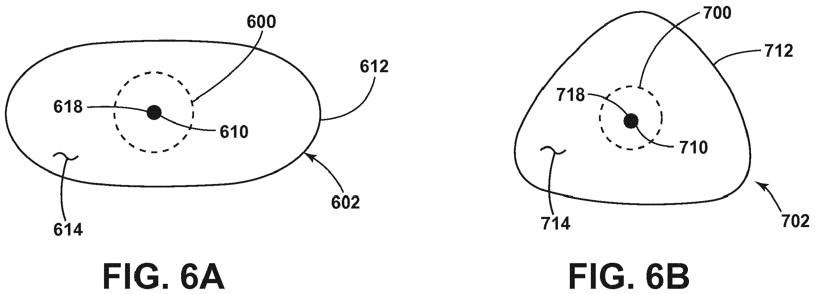

It should be appreciated that embodiments of the relationship between the outlet and the inlet can be contemplated in which the outlet has multiple eccentricities and no portion of the inlet is located within the eccentricities when looking through the outlet along the centerline of the inlet. For example, Figures 6A and 6B illustrate embodiments in which the centerline of the inlet 600, 700 and the outlet 602, 702 do coincide when looking through the outlet 602, 702 along the centerline of the inlet 610, 710.

It should be understood that any combination of the embodiments disclosed herein can be utilized to form a film hole. The film hole can have any shape of an inlet and outlet where the shape or cross-sectional area is different and the metering section is axially offset from the outlet centerline.

Turbine cooling is important in next generation architecture which includes ever increasing temperatures. Current cooling technology needs to expand to the continued increase in core temperature of the engine that comes with more efficient engine design.

Benefits of optimizing the conicals by changing their shape include improving film coverage without introducing spacing issues with adjacent holes for manufacturability. The final product described herein would yield a wider film coverage on the hot surfaces. This geometry allows for increased leading edge thermal performance and improved durability and engine fuel burn.

It should be appreciated that application of the disclosed design is not limited to turbine engines with fan and booster sections, but is applicable to turbojets and turbo engines as well.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. An engine component for a turbine engine, which generates a hot combustion gas flow, and provides a cooling fluid flow, comprising:
   a wall separating the hot combustion gas flow from the cooling fluid flow and having a hot surface along which the hot combustion gas flows and a cooled surface facing the cooling fluid flow; and
   at least one film-hole having a metering section with an inlet provided on the cooled surface, a conical section fluidly coupled to the metering section and having and outlet provided on the hot surface, the outlet having a different cross-sectional shape and cross-sectional area than the inlet, wherein the metering section is oriented relative to the conical section such that a surface line, located on an outer surface of the metering section, is parallel to a centerline of the metering section and tangentially intersects and lies on an outer surface of the conical section.
2. The engine component of clause 1, wherein a centerline of the conical section is non-coaxial with the centerline of the metering section.
3. The engine component of any preceding clause, wherein the cross-sectional shape of the inlet is a circle.
4. The engine component of any preceding clause, wherein the cross-sectional shape of the outlet is elliptical.
5. The engine component of any preceding clause, wherein the cross-sectional shape of the outlet is a triangle.
6. The engine component of any preceding clause, wherein the triangle is a Reuleaux triangle.
7. The engine component of any preceding clause, wherein only a portion of the outer surfaces of the metering section and the conical section are collinear along their full extent.
8. The engine component of any preceding clause, wherein the inlet lies entirely within the outlet when looking through the outlet along the centerline of the inlet.
9. The engine component of any preceding clause, wherein further comprising a leading edge of an airfoil and the at least one film-hole is located within the leading edge.
10. The engine component of any preceding clause, wherein the inlet lies entirely within the outlet when looking through the outlet along the centerline of the inlet.
11. The engine component of any preceding clause, wherein the conical section extends immediately from the metering section.
12. The engine component of any preceding clause, wherein the inlet fully defines the metering section.
13. An engine component for a turbine engine, which generates a hot combustion gas flow, and provides a cooling fluid flow, comprising:
   a wall separating the hot combustion gas flow from the cooling fluid flow and having a hot surface along with the hot combustion gas flows in a hot flow path and a cooled surface facing the cooling fluid flow; and
   at least one film-hole having a metering section with an inlet provided on the cooled surface, a conical section fluidly coupled to the metering section and having and outlet provided on the hot surface, the outlet having a greater cross-sectional area than the inlet, wherein the inlet cross-sectional area projected along its centerline lies entirely within the outlet cross-sectional area projected along the same centerline.
14. The engine component of any preceding clause, wherein a portion of the inlet is tangential to the outlet when looking through the outlet along the centerline of the inlet.
15. The engine component of any preceding clause, wherein only two portions of the inlet are tangential to outlet when looking through the outlet along the centerline of the inlet.
16. The engine component of any preceding clause, wherein the outlet has at least one eccentricity and at least a portion of the inlet is located within the eccentricity when looking through the outlet along the centerline of the inlet.
17. The engine component of any preceding clause, wherein the outlet has multiple eccentricities and no portion of the inlet is located within the eccentricities when looking through the outlet along the centerline of the inlet.
18. The engine component of any preceding clause, wherein the inlet comprises at least one of a circular or elliptical cross section when looking through the outlet along the centerline of the inlet.
19. The engine component of any preceding clause, wherein the outlet comprises at least one of an elliptical or triangular cross section when looking through the outlet along the centerline of the inlet.
20. The engine component of any preceding clause, wherein the triangular cross section comprises a Reuleaux triangle.
21. The engine component of any preceding clause, wherein the conical section extends immediately from the metering section.
22. The engine component of any preceding clause, wherein the inlet fully defines the metering section.

## Claims

1. An engine (10) component (90) for a turbine engine (10), which generates a hot combustion gas flow (H), and provides a cooling fluid flow (C), comprising:
a wall (92) separating the hot combustion gas flow (H) from the cooling fluid flow (C) and having a hot surface (94) along which the hot combustion gas flows (H) and a cooled surface (96) facing the cooling fluid flow (C); and
at least one film-hole (88) having a metering section (106, 206) with an inlet (100, 200, 300, 400, 500, 600, 700) provided on the cooled surface (96), a conical section (109, 209) fluidly coupled to the metering section (106, 206) and having and outlet (102, 202, 302, 402, 502, 602, 702) provided on the hot surface (94), the outlet (102, 202, 302, 402, 502, 602, 702) having a different cross-sectional shape (112, 212, 312, 412, 512, 612, 712) and cross-sectional area (11, 214, 314, 414, 514, 614, 714) than the inlet (100, 200, 300, 400, 500, 600, 700), wherein the metering section (106, 206) is oriented relative to the conical section (109, 209) such that a surface line (111, 211), located on an outer surface (116, 216, 316, 416, 516, 616, 716) of the metering section (106. 206), is parallel to a centerline (110) of the metering section (106, 206) and tangentially intersects (113, 213) and lies on an outer surface (116, 216, 316, 416, 516, 616, 716) of the conical section (109, 209).

2. The engine (10) component (90) of claim 1, wherein a centerline (118) of the conical section (109, 209) is non-coaxial with the centerline (110) of the metering section (106, 206).

3. The engine (10) component (90) of claim 2, wherein the cross-sectional shape (112, 212, 312, 412, 512, 612, 712) of the inlet (100, 200, 300, 400, 500, 600, 700) is a circle.

4. The engine (10) component (90) of either of claim 2 or 3, wherein the cross-sectional shape (112, 212, 312, 412, 512, 612, 712) of the outlet (102, 202, 302, 402, 502, 602, 702) is elliptical.

5. The engine (10) component (90) of either of claim 2 or 3, wherein the cross-sectional shape (112, 212, 312, 412, 512, 612, 712) of the outlet (102, 202, 302, 402, 502, 602, 702) is a triangle (412, 512).

6. The engine (10) component (90) of claim 5, wherein the triangle (412, 512) is a Reuleaux triangle (412).

7. The engine (10) component (90) of any preceding claim, wherein only a portion of the outer surfaces (116, 216, 316, 416, 516, 616, 716) of the metering section (106, 206) and the conical section (109, 209) are collinear along their full extent.

8. The engine (10) component (90) of claim 7, wherein the inlet (100, 200, 300, 400, 500, 600, 700) lies entirely within the outlet (102, 202, 302, 402, 502, 602, 702) when looking through the outlet (102, 202, 302, 402, 502, 602, 702) along the centerline of the inlet (100, 200, 300, 400, 500, 600, 700).

9. The engine (10) component (90) of any preceding claim, wherein the inlet (100, 200, 300, 400, 500, 600, 700) lies entirely within the outlet (102, 202, 302, 402, 502, 602, 702) when looking through the outlet (102, 202, 302, 402, 502, 602, 702) along the centerline of the inlet (100, 200, 300, 400, 500, 600, 700).

10. The engine (10) component (90) of any preceding claim, wherein the conical section (109, 209) extends immediately from the metering section wherein the inlet (100, 200, 300, 400, 500, 600, 700) fully defines the metering section.
